# DEMANDE DE BREVET EUROPEEN

(11) **EP 1 589 199 A1**
(43) Date de publication de la demande: **26.10.2005**
(21) Numéro de dépôt: 05300257.2
(22) Date de dépôt: 07.04.2005
(51) Int. Cl.: F01N 3/28, F01N 3/20

(54) **Dispositif de purification de gaz d'échappement**

(30) Priorité: 19.04.2004 FR 0404072
(71) Demandeur: Peugeot Citroen Automobiles S.A., 78140 Vélizy Villacoublay (FR)
(72) Inventeur: Schneider, Stéphanie, 75011, Paris (FR); Lendresse, Yvane, 92500, Rueil-Malmaison (FR)
(74) Mandataire: Fernandez, Francis Lionel

(57) **Abrégé**

Dispositif de purification de gaz d'échappement d'un moteur à combustion interne, comprenant un revêtement catalytique déposé sur un substrat.

Selon l'invention, ledit revêtement catalytique et/ou ledit substrat présente(nt) au moins une propriété physico-chimique variable transversalement à la direction d'échappement.

Application au traitement des gaz polluants produits par les moteurs à combustion interne.

## Description

La présente invention concerne un dispositif de purification de gaz d'échappement d'un moteur à combustion interne, comprenant un revêtement catalytique déposé sur un substrat.

D'une manière générale, l'invention trouve une application avantageuse dans le domaine du traitement des gaz polluants issus des moteurs à combustion interne qu'ils soient Diesel ou à essence.

Dans ce contexte, l'invention s'applique plus particulièrement à l'optimisation des catalyseurs d'oxydation pour Diesel ayant pour fonction :
- le traitement des hydrocarbures et du monoxyde de carbone CO imbrûlés afin de satisfaire aux normes de dépollution,
- la création de l'énergie calorifique exotherme nécessaire pour atteindre les températures nécessaires à la régénération d'un filtre à particules associé,
- la transformation de monoxyde d'azote NO en dioxyde d'azote NO₂ pour améliorer en aval du dispositif de purification, ou catalyseur, les réactions de réduction des NOx type SCR dont l'efficacité est augmentée en présence d'un mélange 50/50 de NO/NO2.

De même, l'invention peut s'appliquer à un dispositif de purification ayant une fonction de piège à oxydes d'azote NOx dans un moteur à injection directe fonctionnant en mélange pauvre.

Les polluants issus de la combustion d'un moteur Diesel ou essence sont majoritairement les hydrocarbures imbrûlés, les oxydes d'azote (monoxyde d'azote NO et dioxyde d'azote N02), les oxydes de carbone (monoxyde de carbone CO et dioxyde de carbone CO₂) et, dans le cas des moteurs Diesel et des moteurs à injection directe à essence, des particules de suies. Afin de respecter les normes environnementales internationales, la maîtrise des émissions d'hydrocarbures, de CO, de NOx et des particules est impérative et des technologies de post-traitement sont indispensables.

La maîtrise des émissions polluantes en phase gazeuse peut être obtenue par introduction dans la ligne d'échappement de dispositifs de purification, ou catalyseurs, spécifiques, comme par exemple les catalyseurs trois-voies pour les moteurs à essence à injection indirecte ou à injection directe fonctionnant à la stoechiométrie ou des systèmes de pièges à oxydes d'azote, de catalyseurs déNOx permanent utilisant l'ammoniac ou les hydrocarbures comme réducteurs pour les moteurs Diesel et injection directe à essence fonctionnant en mélange pauvre.

Ces convertisseurs catalytiques sont intégrés directement dans la ligne d'échappement du moteur par l'intermédiaire d'une enveloppe métallique renfermant le catalyseur présenté sous forme monolithe catalytique connecté à la ligne d'échappement principale grâce à des cônes de connexion assurant l'étanchéité du système et garantissant la liaison entre les deux éléments de diamètres différents (faible diamètre dans le cas de la ligne d'échappement et diamètre plus large pour le convertisseur catalytique).

D'une manière générale, les paramètres majeurs ayant un impact sur l'efficacité de conversion d'un catalyseur, que ce soit un catalyseur d'oxydation ou un catalyseur de réduction des oxydes d'azote, sont la charge en métaux, généralement des métaux précieux, du convertisseur catalytique, le débit volumique des gaz d'échappement traversant le catalyseur et la température des gaz d'échappement. La charge en métaux permet essentiellement de réduire la température d'amorçage du catalyseur et l'efficacité de conversion des polluants réglementés, mais également d'assurer la conversion des polluants réglementés au cours de l'endurance du véhicule. Le débit volumique des gaz d'échappement traversant axialement le catalyseur permet d'agir sur le temps de contact entre la phase gazeuse et la surface catalytique active et donc sur l'efficacité de conversion des polluants. Enfin, la température des gaz aura un effet sur le délai d'amorçage des catalyseurs placés dans la ligne d'échappement : plus la teneur en métaux précieux est élevée, plus le délai d'amorçage est court.

Par ailleurs, afin de satisfaire les critères d'endurance de plus en plus sévères, il est connu qu'une solution est d'augmenter la teneur en métal précieux ou améliorer le washcoat par exemple.

Les pots d'échappement catalytiques sont constitués généralement d'un substrat poreux délimitant des canaux de passage des gaz, sur lesquels est déposé un revêtement catalytique, généralement des métaux précieux déposés sur des oxydes. Le substrat peut également être métallique lorsque le catalyseur se trouve par exemple en amont de la turbine dans des zones de températures élevées.

Dans le cas des dispositifs de purification conventionnels actuellement implantés sur les véhicules, l'imprégnation en revêtement catalytique est homogène dans tout le volume du catalyseur.

Les solutions techniques actuelles concernant les dépôts de surfaces catalytiques sur les parois des substrats consistent donc à déposer de façon uniforme au sein du catalyseur un revêtement catalytique actif contenant ou non des métaux précieux.

Par contre, on remarquera que dans aucune de ces solutions les conditions de fonctionnement moteur et véhicule ne sont pris en compte.

Dans ce sens, une solution alternative consiste à déposer sur les parois du support un revêtement catalytique dont les propriétés varient axialement dans le sens de l'échappement depuis l'amont du monolithe (entrée du catalyseur) jusqu'à l'aval du monolithe (sortie du catalyseur). Un tel catalyseur est décrit, par exemple, dans la demande de brevet français n° 2 818 688. Les propriétés qui peuvent varier axialement sont essentiellement la charge en métaux précieux, mais il est également possible de faire varier la fonctionnalité (par exemple, piège à oxydes de soufre en amont d'un convertisseur catalytique et piège à oxydes d'azote en aval).

Lorsque les convertisseurs catalytiques sont implantés dans la ligne d'échappement, on constate que la trajectoire des flux gazeux issus de la chambre de combustion conduit à un gradient de vitesse à l'intérieur catalyseur, gradient dont l'importance dépend des conditions moteur et de la forme du cône de connexion entre la ligne principale et le convertisseur catalytique. Le phénomène le plus souvent observé dans le cas des moteurs à combustion interne est une répartition de vitesses plus importantes au centre du catalyseur par rapport à la périphérie du convertisseur catalytique. Ce phénomène a également une autre conséquence, à savoir que les températures au centre du catalyseur sont plus élevées que celles en périphérie du convertisseur.

Aussi, le problème technique à résoudre par l'objet de la présente invention est de proposer un dispositif de purification de gaz d'échappement d'un moteur à combustion interne, comprenant un revêtement catalytique déposé sur un substrat, qui permettrait d'optimiser l'efficacité de conversion des gaz d'échappement polluants en fonction des gradients de débit gazeux et/ou des gradients de température observés radialement dans le convertisseur catalytique.

La solution au problème technique posé consiste, selon la présente invention, en ce que ledit revêtement catalytique et/ou ledit substrat présente(nt) au moins une propriété physico-chimique variable transversalement à la direction d'échappement.

En particulier, conformément à l'invention, ladite propriété physico-chimique est variable radialement autour de la direction d'échappement.

L'invention prévoit en outre que ladite propriété physico-chimique est variable également axialement, le long de la direction d'échappement.

Selon différents modes de réalisation du catalyseur conforme à l'invention, ladite propriété physico-chimique est la teneur en revêtement catalytique et/ou la formulation chimique du substrat et/ou la nature fonctionnelle du substrat.

Ainsi, l'invention consiste en un système de post-traitement des émissions de polluants constitué d'un catalyseur dont la teneur en substance active, métaux précieux notamment, et/ou la nature du substrat, essentiellement des phases oxydes, est différente transversalement à la direction d'échappement, pour une meilleure prise en compte des gradients de débit et/ou de température observés notamment radialement dans un plan perpendiculaire à la direction d'échappement.

De même, une optimisation du catalyseur selon l'invention peut également être réalisée du fait que ladite propriété physico-chimique consiste en une épaisseur de paroi du substrat variable radialement le long du catalyseur.

On peut considérer une augmentation de l'épaisseur de paroi du centre vers l'extrémité pour favoriser soit le transfert thermique du gaz vers le dispositif de purification, soit la quantité de matière active imprégnée sur le support.

Par rapport à un catalyseur imprégné de manière uniforme dans tout son volume, le dispositif de purification de l'invention permet d'optimiser les formulations catalytiques afin de :
- obtenir des performances équivalentes avec un catalyseur à moindre coût,
- améliorer les performances du catalyseur pour un même coût, comme réduire le temps de mise en action,
- améliorer la durabilité du catalyseur pour satisfaire aux normes en vigueur de plus en plus sévères,
- améliorer la résistance à l'empoisonnement,
- apporter des fonctions chimiques différentes suivant les zones du catalyseur.

Par rapport à un substrat uniforme imprégné, le substrat du dispositif de purification de l'invention consistant en une variation d'épaisseur de paroi de façon radiale (de la plus fine au centre vers la plus épaisse en périphérie ou inversement) permet d'optimiser les fonctions suivantes :
- diminuer le temps de mise en action du catalyseur en réduisant l'inertie thermique au centre ou, inversement, permettre d'activer plus rapidement les extrémités du substrat,
- d'optimiser la quantité de revêtement actif (washcoat) suivant l'épaisseur de paroi (pour des mêmes propriétés mécaniques et perte de pression par rapport à un substrat uniforme) pour améliorer les performances du catalyseur. Une plus grande quantité de matière active au centre du catalyseur permettra d'optimiser le temps de mise en action du catalyseur associé à la variation des flux gazeux.

La description qui va suivre en regard des dessins annexés, donnés à titre d'exemples non limitatifs, fera bien comprendre en quoi consiste l'invention et comment elle peut être réalisée.
La figure 1 est une vue en perspective d'un catalyseur d'oxydation connu de l'art antérieur.
La figure 2 est une vue de face représentant un mode de réalisation d'un dispositif de purification conforme à l'invention avec variation de l'imprégnation de façon transversale.
La figure 3 est une vue en perspective d'un mode de réalisation d'un dispositif de purification conforme à l'invention avec variations d'imprégnation transversale et axiale.
La figure 4 est une vue de face d'un mode de réalisation d'un dispositif de purification conforme à l'invention à variation radiale de la nature et/ou de la mise en forme du substrat.

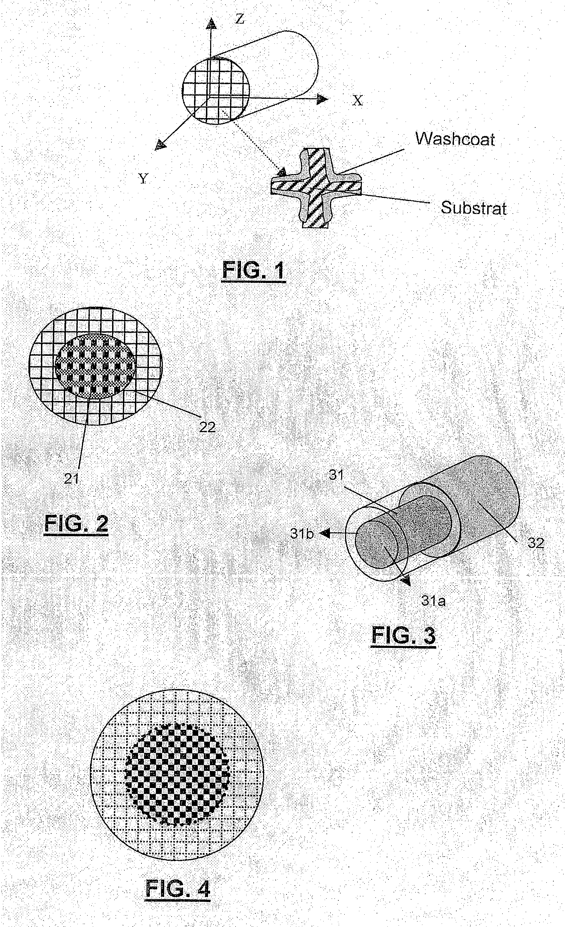

Sur la figure 1 est représenté un catalyseur d'oxydation connu, par exemple un catalyseur de traitement de gaz d'un moteur à combustion interne, comprenant un revêtement catalytique, comme un métal précieux faisant partie de la famille du platine (Pt, Pd, Rh) ou tout autre métal actif associé à un washcoat déposé sur un substrat, notamment poreux. Le substrat et le washcoat sont spécifiquement désignés sur la figure 1. Le substrat peut être en nid d'abeille, métallique, en cordierite ou en tout autre matière adéquate.

La direction d'échappement est représentée par l'axe y, le plan xz étant transversal à la direction y d'échappement.

La figure 2 indique un système catalytique avec variation de l'imprégnation de façon transversale, du point de vue nature ou / et quantité.

Dans cet exemple, la teneur en washcoat peut varier de façon transversale, mais également axiale par rapport à l'axe y de la direction de la ligne d'échappement.

La variation de la teneur en washcoat est telle que :
- soit la partie centrale contient moins de washcoat pour chauffer plus vite par rapport à la partie externe,
- soit inversement la partie externe contient moins de washcoat pour chauffer aussi rapidement que la partie centrale.

Les buts recherchés par la configuration représentée sur la figure 2 sont de diminuer la masse de catalyseur à chauffer pour favoriser le transfert thermique et pouvoir faire varier la teneur en métaux précieux de façon radiale.

A titre d'exemple, par rapport à un catalyseur homogène contenant
3.18 g/l de métaux précieux, le catalyseur inhomogène contiendrait 4.24 g/l métaux précieux dans sa partie centrale 0.74 et 1.41 g/l dans sa partie périphérique 22, en considérant que la partie centrale 21 constitue la moitié en volume du catalyseur total.

Il faut noter que la teneur en catalyseur métallique peut varier également suivant la teneur en washcoat, la quantité de washcoat présente sur le substrat variant en fonction du rayon. On peut ainsi se retrouver par exemple dans le cas d'une teneur importante en partie centrale.

Le choix entre l'un ou l'autre des deux modes de réalisation dépend de la distribution des flux de gaz à l'entrée du dispositif de purification.

La nature du substrat poreux peut également être différente dans les mêmes zones, ainsi que sa mise en forme (paroi plus ou moins épaisse). La figure 4 en montre un exemple.

La figure 3 représente plusieurs configurations envisageables en associant des variations de nature de washcoat, de concentration en métaux précieux, de façon à la fois transversale et axiale.

Appliquer un gradient de concentration correspond à définir des zones bien distinctes où la teneur en métal précieux et/ou la formulation du washcoat est différente de la zone suivante. La définition des différentes zones d'un catalyseur dépend de leur fonctionnalité.

Dans le cas où la vitesse des flux gazeux est supérieure au centre du bloc de catalyseur par rapport à la périphérie, il est possible d'envisager la configuration suivante.

Selon la figure 3, pour améliorer la température d'amorçage du catalyseur on peut augmenter la teneur en métal précieux au centre 31a du bloc 31 par rapport à la périphérie 31 b. En effet, la température est plus élevée au centre qu'en périphérie. L'imprégnation radiale chargée au bloc central 31a facilite de ce fait le traitement des hydrocarbures et de CO, et l'amorçage du catalyseur. De plus, la teneur en métaux précieux peut également être modifiée de façon axiale pour améliorer les performances du catalyseur d'oxydation et sa durabilité (bloc 32).

Dans la partie centrale 31a, le catalyseur peut contenir des éléments capables de piéger les hydrocarbures jusqu'à une température déterminée.

La teneur en métaux précieux peut également être augmentée dans cette même partie pour favoriser la mise en action du catalyseur lors des démarrages à froid.

Les buts recherchés par la configuration de la figure 3 sont de favoriser la mise en action du catalyseur et d'optimiser les coûts.

Par contre, si le catalyseur placé en amont d'un filtre à particules a pour fonction de créer une exotherme pour la régénération du filtre à particules, la température doit être la plus élevée possible en sortie du catalyseur d'oxydation. Il peut être alors intéressant que les hydrocarbures et CO s'oxydent le plus tard possible dans le catalyseur et donc que la teneur en métal précieux soit plus élevée au centre et à la fin du catalyseur. Enfin, il faut noter que si l'on souhaite améliorer les performances du catalyseur en terme de traitement des hydrocarbures à froid tout en conservant une durabilité suffisante, on peut optimiser l'imprégnation de piège à hydrocarbures en début de catalyseur en l'associant à une imprégnation radiale en métaux précieux afin d'améliorer le traitement des hydrocarbures une fois que ceux-ci sont libérés (pour accorder de façon précise la température de déstockage des hydrocarbures et la température à laquelle ils vont être oxydés).

La réalisation pratique d'un dispositif de purification conforme à l'invention peut être effectuée en plusieurs étapes. Dans un premier temps, l'ensemble du bloc constituant le catalyseur est immergé et les zones périphériques à faible chargement en métal sont bouchées. Puis, dans un deuxième temps, le bloc est à nouveau immergé pour recharger en métal les passages centraux non obturés.

## Revendications

1. Dispositif de purification de gaz d'échappement d'un moteur à combustion interne, comprenant un revêtement catalytique déposé sur un substrat, **caractérisé en ce que** ledit revêtement catalytique et/ou ledit substrat présente(nt) des propriétés physico-chimiques variables transversalement à la direction d'échappement, lesdites propriétés physico-chimiques consistant en la teneur en revêtement catalytique et en la nature fonctionnelle du revêtement catalytique et/ou du substrat.

2. Dispositif de purification selon la revendication 1, **caractérisé en ce que** lesdites propriétés physico-chimiques sont variables radialement autour de la direction d'échappement.

3. Dispositif de purification selon l'une des revendications 1 ou 2, **caractérisé en ce que** lesdites propriétés physico-chimiques sont variables également axialement, le long de la direction d'échappement.

4. Dispositif de purification selon l'une quelconque des revendications 1 à 3, **caractérisée en ce que** lesdites propriétés physico-chimiques comprennent la formulation chimique du substrat et/ou du revêtement catalytique.

5. Dispositif de purification selon l'une quelconque des revendications 1 à 4, **caractérisé en ce que** ledit revêtement catalytique est un métal précieux.

6. Dispositif de purification selon l'une quelconque des revendications 2 à 5, **caractérisé en ce que** lesdites propriétés physico-chimiques comprennent une épaisseur de paroi du substrat variable radialement autour de la direction d'échappement.
